Europäisches Patentamt

European Patent Office

Office européen des brevets

(11) Publication number: **0 222 584**
**A2**

# EUROPEAN PATENT APPLICATION

(21) Application number: **86308577.5**

(22) Date of filing: **04.11.86**

(51) Int. Cl.4: **H 04 L 11/16**
**H 04 L 11/20**

(30) Priority: **08.11.85 GB 8527582**
**11.01.86 GB 8600645**
**25.01.86 GB 8601820**

(43) Date of publication of application:
**20.05.87 Bulletin 87/21**

(84) Designated Contracting States:
**AT BE CH DE ES FR GB GR IT LI LU NL SE**

(71) Applicant: **UNIVERSITY OF SALFORD**
**Salford, Manchester M5 4WT (GB)**

**Science and Engineering Research Council (SERC)**
**North Star Avenue**
**Swindon, SN2 1ET (GB)**

(72) Inventor: **Hampshire, Michael John**
**792 Halifax Road Liversedge**
**West Yorkshire (GB)**

**Ball, Edward**
**77 Marland Fold Rochdale**
**OL11 4RF (GB)**

**Linge, Nigel**
**6 The Priory Higher Broughton**
**Salford, M7 9MF (GB)**

**Owen, Edward Charles Garnet**
**54 Norman Road Runcorn**
**Cheshire (GB)**

**Kummer, Paul Stephen**
**Marton House, Chester Lane Marton, Winsford**
**Cheshire (GB)**

**Tasker, Robin**
**11 Thirlmere Close Frodsham**
**Warrington (GB)**

(74) Representative: **Downey, William Gerrard et al**
**WILSON GUNN & ELLIS 41 Royal Exchange Cross Street**
**Manchester M2 7BD (GB)**

(54) **A bridge for and a method for routeing signals between local area networks.**

(57) A bridge for routing signals between local area networks comprises a list 5A,5B of source addresses of signal packets arriving at respective sides of the bridge. destination addresses of the signal packets by a comparator 4A,4B with addresses in the respective lists. If the comparator does not generate a match, the signal packet is routed through the bridge. Source addresses of received signal packets are added to the respective list irrespective of the outcome of the previous comparison, and means are provided to remove the oldest entry from each list of source addresses when the list is filled to capacity.

EP 0 222 584 A2

**Description**

## A BRIDGE FOR AND A METHOD FOR ROUTEING SIGNALS BETWEEN LOCAL AREA NETWORKS

The present invention relates to a bridge for, and a method of routeing signals between local area networks.

Standards for local area networks (LAN) exist of which I.E.E.E. BO2.3 is an example for Carrier Sense Multiple Access with Collision Decection (CSMA/CD LANs). A local area network bridge provides a means of connecting two independent local area networks together. The concept is described in an article by E. Benhamou entitled Multilevel Internetworking Gateways: Architecture and Applications published in the journal COMPUTER, September l983, pp 27-33.

An object of one embodiment of the invention is to provide a bidirectional bridge giving a communications path for appropriate packets between two independent networks.

According to one aspect of the invention there is provided a bridge for bridging between local area networks comprising means for providing a list of source addresses of signal packets arriving on each side of the bridge, means for comparing the destination address of a received packet with the respective list of source addresses, means for routeing a packet through the bridge if the comparator means does not generate a match, means to add the source address of a received packet to the respective list of source addresses irrespective of the previous comparison and means to remove the oldest entry from a list of source addresses when the list is filled to capacity.

According to a second aspect of the invention there is provided a bridge for bridging between local area networks comprising means to record for each signal packet queueing for transmission its age and means to disable the transmission of the signal packet if its age exceeds a known limit.

According to a third aspect of the invention there is provided a bridge for bridging between local area networks comprising means to transmit and receive bridge signal packets, means to detect the presence of loops formed by bridges, means to generate a special bridge signal packet in the event that the bridge both transmits and receives the same bridge signal packet on the same side thereof, means to compare the priority of that special bridge signal packet and means to disable the means for routeing a signal packet through the bridge in dependence upon the priority detected.

According to a fourth aspect of the invention there is provided a bridge for bridging between local area networks comprising means to determine if a bridge should transmit a further bridge signal packet at predetermined intervals, means to receive further bridge signal packets and means to enable the means for routeing a signal packet through the bridge if the absence of a loop is detected.

According to a fifth aspect of the invention there is provided a bridge for bridging between local area networks comprising means to detect the repeated arrival of a further bridge signal packet, and means to transmit a bridge signal packet in the event that the repeated arrival of the further bridge signal packet is not detected.

According to a sixth aspect of the invention there is provided a method of operating a bridge for bridging between local area networks including the steps of providing a list of source addresses of signal packets arriving on each side of the bridge, comparing the destination address of a received packet with the respective list of source addresses, routeing a packet through the bridge if the comparator means does not generate a match, adding the source address of a received packet to the respective list of source addresses irrespective of the previous comparison and removing the oldest entry from a list of source addresses when the list is filled to capacity.

According to a seventh aspect of the invention there is provided a method of operating a bridge for bridging between local area networks including the steps of recording for each signal packet queueing for transmission its age and disabling the transmission of the signal packet if its age exceeds a known limit.

According to a eighth aspect of the invention there is provided a method of operating a bridge for bridging between local area networks including the steps of transmitting and receiving bridge signal packets, detecting the presence of loops formed by bridges, generating a special bridge signal packet in the event that the bridge both transmits and receives the same bridge signal packet on the same side thereof, comparing the priority of that special bridge signal packet and disabling means for routeing a signal packet through the bridge in dependence upon the priority detected.

According to a ninth aspect of the invention there is provided a method of operating a bridge for bridging between local area networks including the steps of determining if a bridge should transmit a further bridge signal packet at predetermined intervals, receiving further bridge signal packets and enabling routeing of a signal packet through the bridge if the absence of a loop is detected.

According to a tenth aspect of the invention, there is provided a method of operating a bridge for bridging between local area networks including the steps of detecting the repeated arrival of a further bridge signal packet, and transmitting a bridge signal packet, in the event that the repeated arrival of the further bridge signal packet is not detected.

The above first and sixth aspects of the invention permit a decision to be made as to whether or not to route a packet through the bridge. The second and seventh aspects of the invention ensure that any given packet only remains within the bridge for a fixed amount of time. The third and eighth aspects of the invention permit a decision to be made as to whether or not to disable a bridge because of the presence of bridge loops by issuing a bridge signal packet. The fourth and ninth aspects of the invention provides for identification of the dominant bridge in the network topology and transmission of a further bridge signal packet sent by the dominant bridge to detect any failure of an active bridge which is not the dominant bridge by detecting the presence of this further bridge signal packet which is repeatedly sent at predetermined intervals by the dominant bridge. The fifth and tenth aspects of the invention detects the failure of non-disabled bridges and re-arranges the topography around a new dominant bridge by issuing a bridge signal packet to detect the topography of the bridge loops.

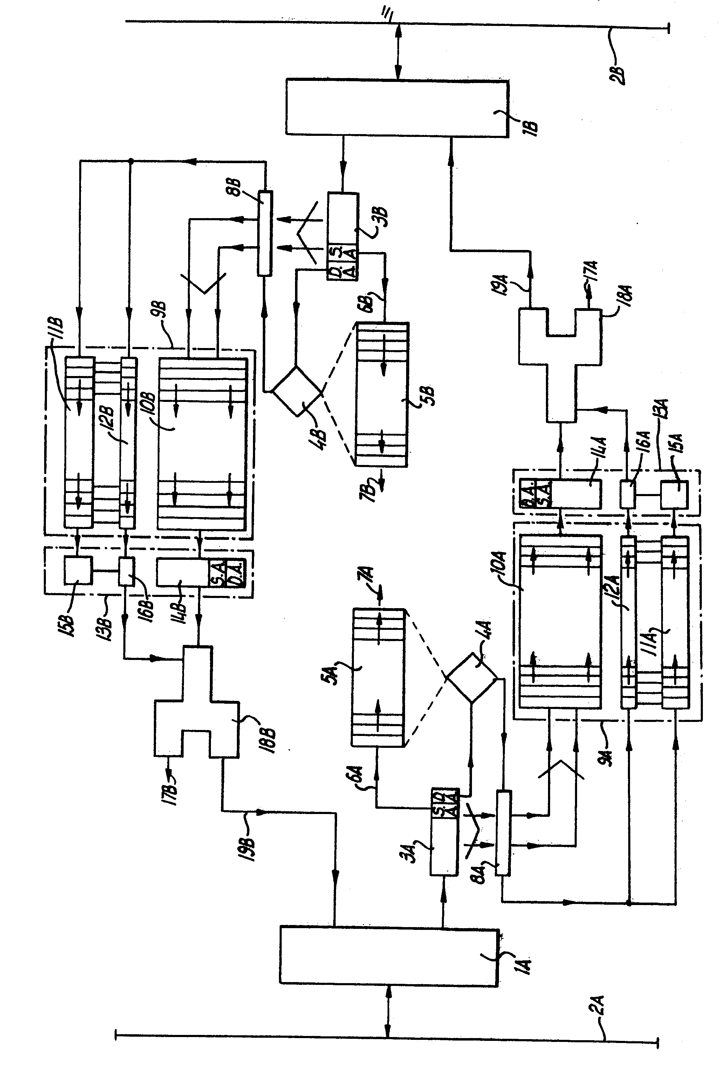

In order that the invention may be more clearly understood one embodiment thereof will now be described by way of example, with reference to the single figure of the accompanying drawing which shows a media access control (MAC) layer bridge between two CSMA/CD local area networks (LANs).

A MAC layer bridge contains two major functional units namely, the address filter which provides data packet routeing and the bridge protocol which enables an arbitrary network topology comprising bridges and LANs to be configured into a loop free topology. The bridge protocol also provides fault tolerance by detecting the loss of an existing bridge and also ensuring that any new bridges are automatically incorporated into the complete network topology. A MAC layer bridge must be able to perform data packet routeing in both directions and so the bridge inherently exhibits a degree of symmetry which is reflected in the accompanying drawing where each half of the bridge is distinguished by the A and B notation.

The MAC layer bridge must provide two CSMA/CD interfaces (IA, IB) which enable the connection of the two local area networks (2A,2B). Commercial integrated circuit controllers together with transceivers are now available which can provide this function. The Advanced Micro Devices AM7990DC and AM7991/92A form a typical example of a controller and BICC Data Networks IIlO forms an example of a transceiver.

The two CSMA/CD interfaces receive all data packets irrespective of the addressing information contained within them. However, the bridge must then perform a series of address routeing decisions which govern whether or not any given received data packet should be routed through the bridge and transmitted onto the other network.

All bridges contain an address filter on both sides. A received data packet is placed into a RECEIVED PACKET BUFFER (3A,3B) from where the destination address (DA) of the packet is compared (4A,4B) with the contents of a SOURCE LIST (5A,5B). If the comparison is true then the received packet is discarded and if it is false the data packet is passed into the next stage. Irrespective of the outome of the comparison, the source address (SA) of the packet contained within the RECEIVE PACKET BUFFER, is added (6A, 6B) to the SOURCE LIST, i.e. the SOURCE LIST contains a record of the source addresses of the last 'n' received packets where 'n' is the maximum number of entries which can be stored in the SOURCE LIST. The SOURCE LIST will eventually fill up after which point the addition of a new source address into the SOURCE LIST results in the removal of the 'oldest' entry (7A,7B).

Following a false comparison between the destination address of the received packet in the RECEIVE PACKET BUFFER and the contents of the source list, the entire packet is copied (8A,8B) into the TRANSMIT PACKET QUEUE (9A,9B). Each entry in the TRANSMIT PACKET QUEUE comprises three fields namely, the packet itself (IOA,IOB), an age count (IIA,IIB) and an enable flag (I2A,I2B). On placing a new entry into the TRANSMIT PACKET QUEUE, the age count field is reset and the enable flag set.

Each entry in the TRANSMIT PACKET QUEUE is taken in turn, 'oldest' first, and placed (I4A,I4B) into a TRANSMIT PACKET BUFFER (I3A,I3B), the age count and enable flag are also transferred to buffers (I5A,I5B) and (I6A,I6B) respectively. Maintaining the order within the TRANSMIT PACKET QUEUE ensures that mis-sequenced data packets are not generated. Such a situation leads to problems with existing network protocols.

To ensure individual packets do not spend too long within the bridge, the age field associated with the TRANSMIT PACKET QUEUE is adjusted to reflect the time the corresponding entry has resided within the queue. When the age count equals a predetermined value, the enable flag, within the TRANSMIT PACKET QUEUE and or BUFFER, is reset. This flag indicates that the packet age has exceeded the maximum limit and results in the corresponding data packet being rejected (I7A,I7B) via the TRANSMIT CONTROL BLOCK (I8A,I8B). The TRANSMIT CONTROL BLOCK combines the function of data switch and control logic. Data packets present in the TRANSMIT PACKET BUFFER which have a valid age are transmitted onto the LAN (I9A,I9B).

The second major unit of a bridge is the bridge protocol. The bridge protocol operates between bridges only. All bridges comprising the network topology are assigned a unique group address known as the BRIDGE GROUP ADDRESS (BGA). Communication between bridges is achieved using minimum length MAC layer data packets which contain the BRIDGE GROUP ADDRESS in the destination address field. Such data packets are called BRIDGE DATA UNITS (BDUs) or BRIDGE SIGNAL PACKETS. The source address of the BDU indicates the bridge which issued the BDU; the data field contains one byte called the IDENTIFIER BYTE which is used to distinguish between BDU types of which there are three. The remainder of the data field is not used.

Operation of the bridge protocol defines three types of bridge functionality:-

I) SUPERVISOR - performs periodic topology checks and data packet routeing.

2) ACTIVE - performs data packet routeing and responds to received BDUs.

3) STANDBY - performs no data packet routeing but responds to received BDUs.

The assignement of bridges into these three states will now be described. When a bridge first powers up it issues a BDU called a TOPOLOGY RESET (TR). A bridge which issues a TR sets a TOPOLOGY RESET PRIORITY LEVEL (TRPL), governed by the actual unique bridge addresses, to its own bridge address. At the same time a TOPOLOGY RESET TIMER (TRT) is started. The bridge will perform no data packet routeing until the TRT expires. If the TRT expires, the bridge can assume that the network topology has been reconfigured and therefore is loop free. Under these conditions the bridge is now designated the SUPERVISOR. The functions performed by the SUPERVISOR will be described in a subsequent paragraph.

The bridge remains in an idle state until either the timer expires or further TRs are received. If a TR is received the bridge immediately stops routeing data packets and clears its SOURCE LISTs. The priority of the received TR is compared with the priority to which the bridge is operating. Bridges which have neither issued nor received a TR will be operating at a NULL priority and therefore, any received TR must be of a higher priority. Lower priority TRs are always rejected.

When a bridge receives a higher priority TR, it adjusts the contents of the TRPL to the new value, resets the TOPOLOGY RESET TIMER, sets a TOPOLOGY RESET FLAG (TRF) to indicate the side of the bridge on which the highest priority TR is received, and retransmits the received TR onto the other side of the bridge unaltered.

Bridge loops are detected when a bridge, which has retransmitted a TR, receives a TR of the same priority on the side of the bridge to which the retransmission took place. Under these conditions, it is not known which other bridges are involved in the loop. As a result, bridges which enter this state must negotiate with each other to ensure that each loop is broken in only one place. To achieve this, a STANDBY RESOLVE (SR) BDU is transmitted from the side of the bridge on which the loop has been detected. The SR is non-forwarding, i.e. a bridge which receives a SR does not retransmit it irrespective of how the SR is processed. A bridge which did not issue a SBR ignores all received SRs.

All those bridges which issue a SR and receive a higher priority SR set a LOOP DETECT FLAG and clear the TRF. Hence the bridge which issued the highest priority SR is the only bridge in the localised SR transaction with the LOOP DETECT FLAG reset and the TRF set. The TOPOLOGY RESET TIMER is reset and each bridge enters an idle state until either a higher priority TR is received or the timer expires. Reception of a higher priority TR causes the bridge to resume the states just described.

Once the TR/SR transactions are complete, all bridges should be operating at the same priority and the TOPOLOGY RESET TIMERs in each bridge will expires causing the bridges to enter one of the three operational modes of SUPERVISOR, ACTIVE or STANDBY.

Operation of the bridge protocol beyond this point is best described by considering the individual operation of the three bridge modes. In all three cases, SOURCE LISTs and TRPL are reset prior to entering the appropriate mode. This ensures that the bridges can respond to any new TRs which may be issued. The reception of a TR will cause an immediate shut down of data packet routeing and the protocol will switch into the states just described.

l) SUPERVISOR

The SUPERVISOR bridge is the bridge with the highest priority address which issued a TR. That is to say that there may be other bridges on the network with a higher priority address but which did not issue a TR. Having been assigned SUPERVISOR status, the bridge is responsible for ensuring network integrity. This is achieved by periodically issuing a SOFT TOPOLOGY RESET (STR) BDU. The periodicity of the STR is controlled by a timer called the SOFT TOPOLOGY RESET TIMER (STRT). Response to the STR and its effectiveness is controlled by the other two bridge modes. The SUPERVISOR performs no other function within the bridge protocol but does invoke data packet routeing.

2) ACTIVE

An ACTIVE bridge performs data packet routeing and expects to receive a STR on the side of the bridge on which the original TR was received. In order to detect this the STRT is started. When a STR is received, the STRT is reset, and the STR retransmitted, unaltered, onto the other side of the bridge. If the STRT expires without reception of a STR, the bridge assumes that the topology has changed and abandons its data packet routeing and issues its own TR in order to reconfigure the network and compete for SUPERVISOR status.

3) STANDBY

A STANDBY bridge is a bridge which received the same TR on both sides, i.e. it is causing a data loop. To prevent data circulating uncontrolled around such loops, STANDBY bridges do not perfom data packet routeing. However, they do respond to BDUs and expect to receive a STR on both sides of the bridge. In order to detect this, a STRT is started and only reset when a STR has been received on both sides. If only one or neither of the two STRs are received, the bridge assumes that a topology change has occurred and transmits its own TR in order to reconfigure the network and compete for SUPERVISOR status.

Hence, the TR ensures that new bridges are automatically incorporated into the overall network topology whilst, the STR ensures that the network can reconfigure if the SUPERVISOR or any of the ACTIVE bridges fail.

The bridge also has the ability to respond to management data packets in order to send data packets relating to the bridge status. There also exists a mechanism for ensuring that an individual bridge becomes a network SUPERVISOR. One simple method for this is to force a bridge to issue a TR by sending it a special data packet or by disabling the bridge by hardware or software means and reenabling it.

Bridges in the ACTIVE and SUPERVISOR modes perform data packet routeing whilst bridges in the STANDBY mode do not.

To overcome situations where a TR or SR may have been corrupted and therefore lost, a topology check is performed before the bridges actually enter one of the above modes. Topology checks or confirmations are achieved by issuing a STR. The priority of the STR to which a bridge must respond is maintained by copying the TRPL into an equavalent SOFT TOPOLOGY RESET PRIORITY LEVEL. The value of the TRPL can then be erased.

It will be appreciated that the above embodiment has been described by way of example and that many variations are possible without departing from the scope of the invention.

## Claims

1. A bridge for bridging between local area networks comprising means for providing a list of source addresses of signal packets arriving on each side of the bridge, means for comparing the destination address of a received packet with the respective list of source addresses, means for routeing a packet through the bridge if the comparator means does not generate a match, means to add the source address of a received packet to the respective list of source addresses irrespective of the previous comparison and means to remove the oldest entry from a list of source addresses when the list is filled to capacity.

2. A bridge as claimed in claim 1, comprising means for recording the age of each signal packet queuing for transmission and means to disable the transmission of the signal packet if its age exceeds a known limit.

3. A bridge as claimed in claim 1 or 2, comprising means to detect the presence of loops formed by bridges, means to generate a special bridge signal packet in the event that the bridge both transmits and receives the same bridge signal packet on the same side thereof, means to compare the priority of that special bridge signal packet and means to disable the means for routeing a signal packet through the bridge in dependence upon the priority detected.

4. A bridge as claimed in claim 1,2 or 3, comprising means to determine if a bridge should transmit a further bridge signal packet at predetermined intervals, means to receive further bridge signal packets and means to enable the means for routeing a signal packet through the bridge if the absence of a loop is detected.

5. A bridge as claimed in any of claims 1 to 4, comprising means to detect the repeated arrival of a further bridge signal packet, and means to transmit a bridge signal packet in the event that the repeated arrival of the further bridge signal packet is not detected.

6. A bridge for bridging between local area networks comprising means to record for each signal packet queueing for transmission its age and means to disable the transmission of the signal packet if its age exceeds a known limit.

7. A bridge for bridging between local area networks comprising means to transmit and receive bridge signal packets, means to detect the presence of loops formed by bridges, means to generate a special bridge signal packet in the event that the bridge both transmits and receives the same bridge signal packet on the same side thereof, means to compare the priority of that special bridge signal packet and means to disable the means for routeing a signal packet through the bridge in dependence upon the priority detected.

8. A method of operating a bridge for bridging between local area networks including the steps of providing a list of source addresses of signal packets arriving on each side of the bridge, comparing the destination address of a received packet with the respective list of source addresses, routeing a packet through the bridge if the comparator means does not generate a match, adding the source address of a received packet to the respective list of source addresses irrespective of the previous comparison and removing the oldest entry from a list of source addresses when the list is filled to capacity.

9. A method as claimed in claim 8, including the steps of recording for each signal packet queueing for transmission its age and disabling the transmission of the signal packet if its age exceeds a known limit.

10. A method as claimed in claim 8 or 9, including the steps of transmitting and receiving bridge signal packets, detecting the presence of loops formed by bridges, generating a special bridge signal packet in the event that the bridge both transmits and receives the same bridge signal packet on the same side thereof, comparing the priority of that special bridge signal packet and disabling means for routeing a signal packet through the bridge in dependence upon the priority detected.

11. A method as claimed in claim 8, 9 or 10, including the steps of determining if a bridge should transmit a further bridge signal packet at predetermined intervals, receiving further bridge signal packets and enabling routeing of a signal packet through the bridge if the absence of a loop is detected.

12. A method as claimed in any of claims 8 to 11, including the steps of detecting the repeated arrival of a further bridge signal packet, and transmitting a bridge signal packet, in the event that the repeated arrival of the further bridge signal packet is not detected.

13. A method of operating a bridge for bridging between local area networks including the steps of recording for each signal packet queueing for transmission its age and disabling the transmission of the signal packet if its age exceeds a known limit.

14. A method of operating a bridge for bridging between local area networks including the steps of transmitting and receiving bridge signal packets, detecting the presence of loops formed by bridges, generating a special bridge signal packet in the event that the bridge both transmits and receives the same bridge signal packet on the same side thereof, comparing the priority of that special bridge signal packet and disabling means for routeing a signal packet through the bridge in dependence upon the priority detected.

0222584